# EUROPEAN PATENT APPLICATION

(11) **EP 4 545 187 A2**
(43) Date of publication of application: **30.04.2025**
(21) Application number: 24222064.8
(22) Date of filing: 10.12.2021
(51) Int. Cl.: B05B 15/652

(54) **SYSTEMS AND METHODS FOR CAVITATION ABRASIVE FINISHING OF INTERIOR SURFACES**

(30) Priority: 11.12.2020 US 202063124682 P; 04.12.2021 US 202117542394
(62) Divisional of application: 21213783.0
(71) Applicant: The Boeing Company, Arlington, VA 22202 (US)
(72) Inventor: SANDERS, Daniel Gordon, Arlington, 22202 (US)
(74) Representative: Carrie, Rosemary Louise Hunter

(57) **Abstract**

A method of smoothing an inner surface of a tubular wall of a workpiece is disclosed, including immersing the workpiece in a mixture of a liquid and an abrasive and inserting a cavitation peening nozzle into a cavity of the workpiece. The method further includes injecting a cavitating jet from the cavitation peening nozzle into the cavity.

## Description

### BACKGROUND

Additive manufacturing has enabled efficient manufacturing of new components with complex shapes and features which are not practical or feasible to manufacture by previous methods. However, the resulting surface finish is typically much rougher than parts produced by traditional manufacturing methods. Cavitation Abrasive Surface Finishing (CASF) is a promising new method of mechanically smoothing such surface roughness. Cavitation bubbles are formed in a fluid by a transition to gas phase resulting from an increase in flow velocity and internal energy, then a collapse implosion as the flow velocity and pressure surrounding the bubbles dissipates. When a cavitation bubble collapses, a micro-jet is produced that can energize particles of an abrasive material. However, generating abrasive cavitation bubble clouds in sufficient proximity to surfaces interior to channels or other structures is not feasible with current CASF apparatus.

### SUMMARY

The present disclosure provides systems, apparatus, and methods relating to smoothing interior surfaces using cavitation abrasive surface finishing. In some examples, a method of smoothing an inner surface of a tubular wall of a workpiece may include immersing the workpiece in a mixture of a liquid and an abrasive and inserting a cavitation peening nozzle into a cavity of the workpiece. The method may further include injecting a cavitating jet from the cavitation peening nozzle into the cavity.

In some examples, an apparatus for smoothing a surface may include a first fluid source, a cavitation peening nozzle, a conduit connecting the first fluid source to the cavitation peening nozzle, and a pump configured to pump fluid from the first fluid source through the conduit to the cavitation peening nozzle. The cavitation peening nozzle may have an external side and a spacing device extending outward from the external side, and may be configured to generate a cavitation bubble cloud for smoothing an inner surface of a tubular wall of a workpiece.

In some examples, an apparatus for smoothing a surface may include a fluid source and a cavitation peening nozzle configured to generate a cavitation bubble cloud for smoothing an inner surface of a tubular wall of a workpiece. The apparatus may further include a conduit connecting the fluid source to the cavitation peening nozzle, a pump configured to pump high pressure fluid from the fluid source through the conduit to the cavitation peening nozzle, and a slurry of a liquid and an abrasive inside the tubular wall of the workpiece.

Features, functions, and advantages may be achieved independently in various examples of the present disclosure, or may be combined in yet other examples, further details of which can be seen with reference to the following description and drawings.

### BRIEF DESCRIPTION OF THE DRAWINGS

Fig. 1 is a schematic diagram of an illustrative abrasive cavitation system for interior surfaces in accordance with aspects of the present disclosure.
Fig. 2 is an isometric view of a nozzle assembly of another illustrative abrasive cavitation system for interior surfaces.
Fig. 3 is an isometric view of the nozzle assembly of Fig. 2, finishing an interior surface of a pipe, with a side wall of the pipe wall cut away to show the nozzle.
Fig. 4 is an axial view of the nozzle assembly of Fig. 2 in a pipe, with a guide vane attachment.
Fig. 5 is an isometric view of an additively manufactured part with two curvilinear interior channels.
Fig. 6 is an isometric view of the nozzle assembly of Fig. 2 used in a system with an additional nozzle assembly, finishing interior surfaces of the two curvilinear interior channels of the part of Fig. 5, with sections of the part cut away to show the nozzles.
Fig. 7 is a flow chart depicting steps of an illustrative method for cavitation abrasive surface finishing of an interior surface according to the present teachings

### DETAILED DESCRIPTION

Various aspects and examples of systems and apparatus for cavitation abrasive finishing of interior surfaces, as well as related methods, are described below and illustrated in the associated drawings. Unless otherwise specified, an abrasive cavitation system in accordance with the present teachings, and/or its various components may, but are not required to, contain at least one of the structures, components, functionalities, and/or variations described, illustrated, and/or incorporated herein. Furthermore, unless specifically excluded, the process steps, structures, components, functionalities, and/or variations described, illustrated, and/or incorporated herein in connection with the present teachings may be included in other similar devices and methods, including being interchangeable between disclosed examples. The following description of various examples is merely illustrative in nature and is in no way intended to limit the disclosure, its application, or uses. Additionally, the advantages provided by the examples described below are illustrative in nature and not all examples provide the same advantages or the same degree of advantages.

This Detailed Description includes the following sections, which follow immediately below: (1) Overview; (2) Examples, Components, and Alternatives; (3) Illustrative Combinations and Additional Examples; (4) Advantages, Features, and Benefits; and (5) Conclusion. The Examples, Components, and Alternatives section is further divided into subsections A through C, each of which is labeled accordingly.

### Overview

In general, a system for cavitation abrasive finishing of interior surfaces in accordance with the present teachings may include nozzle assembly having a cavitation peening nozzle, a spacing device, and a flexible fluid supply conduit, and a container filled with a fluid. A part having an interior surface to be finished may be submerged in the fluid filling the container, such that an interior space defined by the interior surface is filled with the fluid. The fluid may include a suspended abrasive particulate material and/or abrasive particles may be otherwise introduced into the interior space. The nozzle assembly may be inserted into the interior space, and used to generate a cloud of cavitation bubbles to energize the abrasive particles, thereby smoothing the interior surface and removing any manufacturing process materials.

### Examples, Components, and Alternatives

The following sections describe selected aspects of exemplary cavitation abrasive surface finishing apparatus as well as related systems and/or methods. The examples in these sections are intended for illustration and should not be interpreted as limiting the entire scope of the present disclosure. Each section may include one or more distinct examples, and/or contextual or related information, function, and/or structure.

### A. Illustrative System for Surface Smoothing

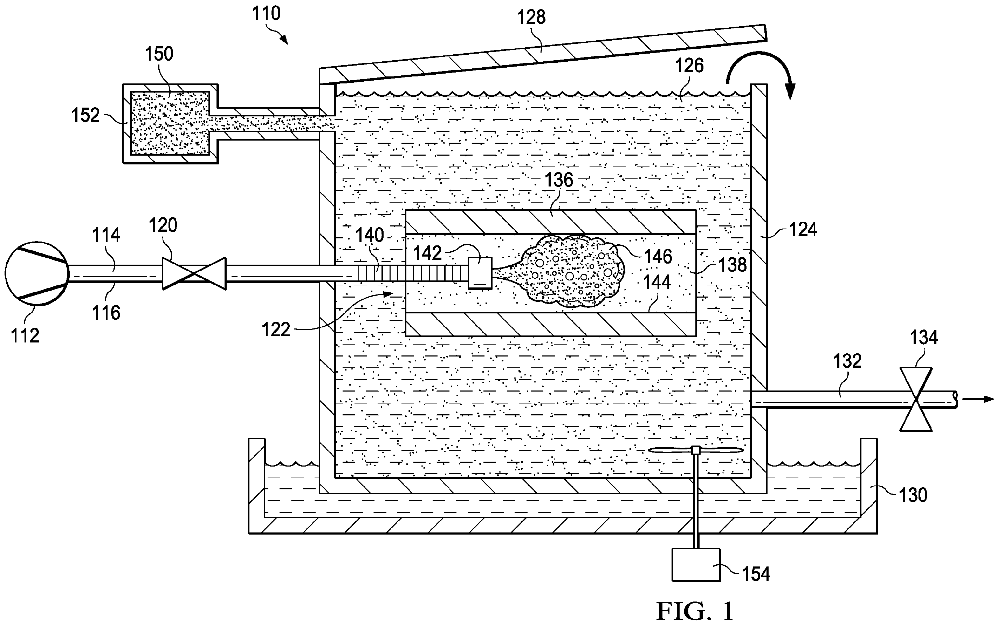

As shown in Fig. 1, this section describes an illustrative system 110 for smoothing interior surfaces. System 110 is an example of a system for cavitation abrasive finishing of interior surfaces, as described above.

Fig. 1 is a schematic diagram of system 110. A supply reservoir system 113, including a high-pressure pump 112, supplies pressurized water 114 along a conduit 116. A control valve 120 may allow precise control of the pressure and flow rate of water supplied along conduit 116 to a nozzle assembly 122. In some examples, system 110 may include a plurality of nozzle assemblies, which may be matching or differing in size and/or shape. In such examples, the plurality of nozzle assemblies may all be supplied by high-pressure pump 112 along conduit 116, or may have separate dedicated supplies of precisely controlled high pressure water.

Nozzle assembly 122 is disposed in a pressurized tank 124 filled with a slurry 126 of an abrasive particulate material 150 mixed with water. Lid 128 of tank 124 may open to allow overflow from the tank into a catchment container 130. The lid may be coupled to tank 124 by a spring, may be regulated by a relief valve, or may be constrained by a weight, in order to maintain pressure in the tank. Abrasive slurry 126 also drains from tank 124 along a conduit 132, regulated by a control valve 134.

Nozzle assembly 122 includes a flexible conduit 140 and a cavitation peening nozzle 142. Flexible conduit 140 may include any structure appropriate to carry high pressure fluid that can be repeatedly flexed, bent, twisted and/or otherwise reconfigured. The conduit may include one or more flexible materials and/or mechanisms enabling flexion such as hinges or joints. Nozzle assembly 122 may include a material appropriate to withstand sustained exposure to cavitation and high energy abrasive particles, particularly on an outer surface of the assembly. In some examples, flexible conduit 140 may be connected to cavitation nozzle 142 by a section of rigid piping, and/or the assembly may be otherwise configured to achieve resistance to abrasion or other desired structural properties.

Nozzle 142 of assembly 122 is inserted into a cavity 138 of a workpiece 136 submerged in tank 124, to smooth an internal surface 144. More specifically, the surface 144 is an inner surface of a tubular wall of workpiece 136. For example, the nozzle may be inserted into a tubular workpiece such as a channel, a hole, a chamber, a recess, a bore, an orifice, an aperture, and/or any channel-like feature. In the depicted example, workpiece 136 is a cylindrical pipe with a straight, circular central channel. Flexible conduit 140 of nozzle assembly 122 may also facilitate cleaning of non-linear or curved channel-like features. System 110 may be configured specifically for smoothing of internal surface 144 of workpiece 136, may be configured for use with a range of similar workpieces, or may be configured for use with a wide variety of workpieces.

High pressure water 114 is injected by nozzle 142 into abrasive slurry 126 of tank 124 as a cavitating jet. An interaction between the cavitating jet and the abrasive slurry forms a cloud 146 of cavitation bubbles and abrasive particles. As the bubbles of cloud 146 collapse, particles of abrasive material 150 may be excited and energized. The micro-jets created by collapsing bubbles may collectively accelerate the motion of the particles. As the mixture of bubbles and particles contacts surface 144 of workpiece 136, the particles may impact the surface and remove material. That is, the abrasive particles may be acted on by the high forces of the cavitation cloud to smooth internal surface 144.

Normal cavitation peening may also occur, as the cavitation bubbles interact directly with surface 144 of workpiece 136. Surface 144 may be thereby peened, improving residual stress and fatigue strength, and cleaned, ready for painting or use.

The collapsing impact force of a cavitation bubble is determined in part by the pressure of injected water 114, the pressure of slurry 126 in tank 124, the ratio between the two pressures, and the temperature of water 114 and slurry 126 of tank 124. To optimize these parameters, pressure, flow rate, or temperature sensors may be included in tank 124, and/or in conduits 116 or 132. High pressure water 114 may be between 50 and 20,000 pounds per square inch, or any effective pressure. A preferred pressure for water 114 may depend on the pressure slurry 126 in tank 124, a diameter of surface 144 of workpiece 136, and/or a size of cavitating nozzle 142. Preferred pressure may also relate to design, geometry, and/or other properties of the cavitating nozzle.

To optimize these parameters, a pressure and temperature sensor may be included in tank 124, or in any of conduits 116 or 132. Control valves 120, 134 and lid 128 as well as reservoir supply system 113 and a temperature control system may be connected to an electronic controller or other such component to allow precise, coordinated control of pressure, flow, and temperature conditions throughout system 110.

In the pictured example, the cavitated fluid is water. However, any desired fluid may be used. Properties such as viscosity of the fluid used may affect collapsing force of cavitation bubbles and a fluid may be chosen to improve impact, or decrease the pressure required for a desired impact level. The fluid may also be selected according to properties of the abrasive material used, and/or to achieve desired properties of slurry 126. Any effective fluid flow device may be used to pump pressurized fluid through nozzle assembly 122.

As high-pressure water 114 is injected by nozzle assembly 122 into tank 124, the ratio of water to abrasive particles in slurry 126 may be affected. To maintain a desired ratio of slurry 126, abrasive material 150 may be added from a source 152. Source 152 may be regulated by an electronic controller configured to coordinate introduction of water, introduction of abrasive material, overflow of slurry 126, and outflow of the slurry through conduit 132.

Abrasive material 150 may include particles of any effective material, of any grit size, or may include a mixture of materials. For example, the abrasive material may include metal, glass, ceramic, silica oxide, aluminum oxide, pumice, nut shells, corn cob, and/or plastic particles. For another example, the abrasive material may include natural or synthetic rubber, silicon, fluoropolymer, elastomer, Viton, Teflon, and/or a Fullerene based carbon nano-material particles. All particles may preferably be within a range of approximately 16 to 1200 ANSI grit size. In the present example, the abrasive material is a garnet grit of grit size 150.

In the present example, slurry 126 is preferably a ratio of approximately one third abrasive material and two thirds water. An appropriate ratio may be selected according to the abrasive material and/or cavitation fluid used. The density or concentration of abrasive material in the slurry may be selected to achieve a desired material removal rate (MRR).

Particles of abrasive material 150 may tend to fall out of suspension in slurry 126 over time, under the action of gravity. To maintain suspension of slurry 126, a mixing device 154 is positioned in tank 124. In the present example, mixing device 154 is a mechanical agitator such as a rotating propeller, and is positioned at the bottom of tank 124. In general, any effective means of stirring, mixing, agitating or otherwise maintaining suspension of abrasive particles in slurry 126 may be used. For example, an ultrasonic agitator may be used, an agitator may be positioned at the top or side of tank 124, and/or a plurality of agitators may be positioned at multiple locations throughout the tank.

### B. Illustrative Apparatus for Smoothing a Surface

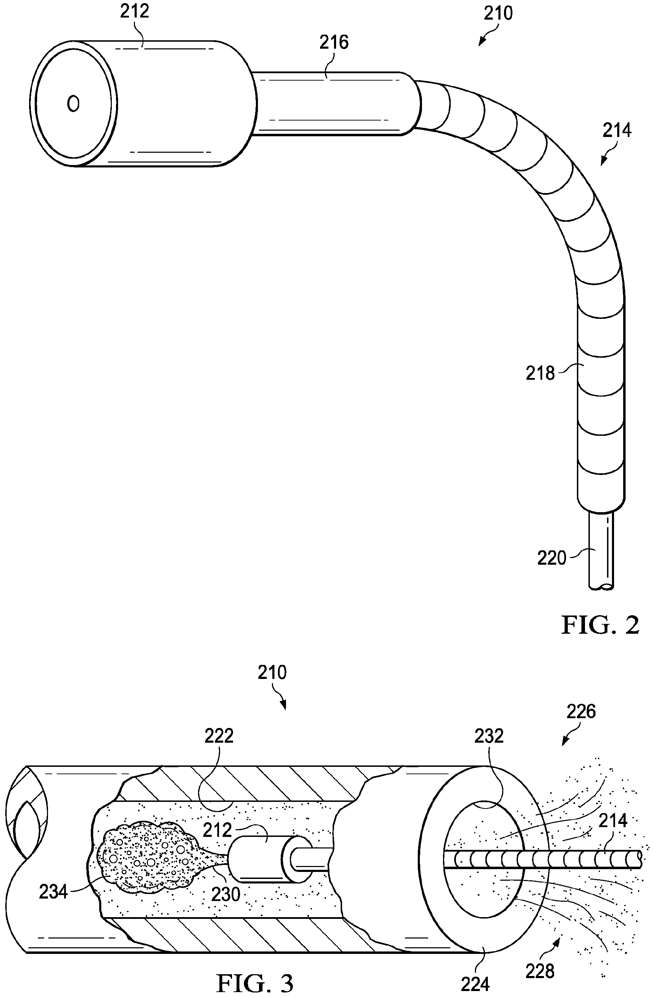

As shown in Figs. 2-6, this section describes an illustrative nozzle assembly 210 for smoothing an inner surface of a workpiece. Assembly 210 is an example of nozzle assembly 122 or a cavitation nozzle assembly, as described above. Assembly 210 may be used as part of a system such as abrasive cavitation system 110 above and/or used in a method such as interior surface finish method 300 below.

Fig. 2 is an isometric view of nozzle assembly 210, including a cavitation peening nozzle 212 and a flexible conduit 214. The flexible conduit includes an outer metal-protected hose 218 and an inner polymeric high-pressure supply hose 220. Nozzle 212 is coupled to outer hose 218 and inner hose 220 by a short section of rigid piping 216, which may also be described as a metal protector.

Outer hose 218 may include a metallic material or metal alloy, a braided material, a pleated material, jointed rigid sections, and/or any material providing resistance to cavitation peening and impacts from high energy abrasive particles. The outer hose may be sufficiently durable to protect inner hose 220 throughout extended exposure to peening and abrasive impacts. In some examples, nozzle assembly 210 may be configured to allow replacement of outer hose 218 or flexible conduit 214 once a sufficient level of wear to outer hose 218 is reached to compromise the protection of inner hose 220.

Inner hose 220 may include a flexible polymer or plastic, and may be rated for high pressures. The inner hose may be sized to provide a desired flow rate at a pressure supplied by a selected pump or compressor, and/or to provide a desired pressure at a supplied flow rate. Inner hose 220 may also be appropriate to a temperature and/or chemical properties of a liquid used for cavitation.

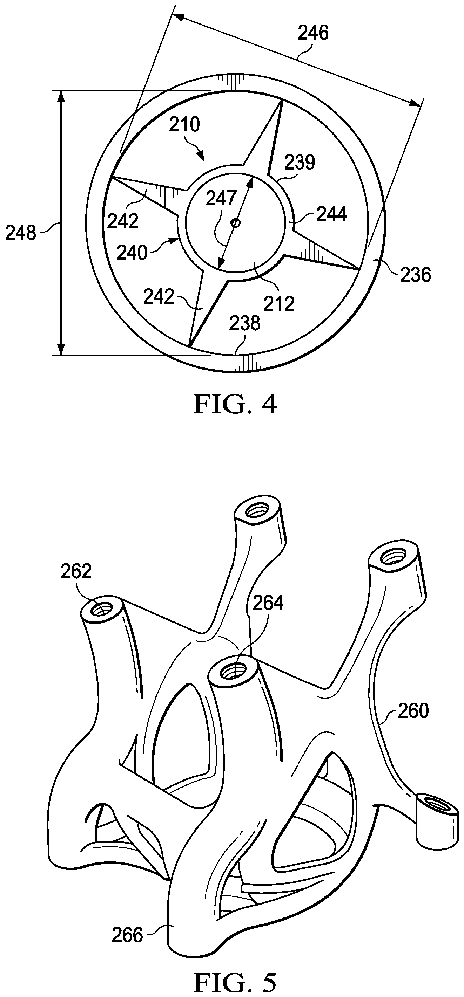

Nozzle 212 is depicted as cylindrical, with a circular orifice. In general, the nozzle may have any geometry or configuration effective in producing a cavitating jet. That is the nozzle is configured to dispense or inject a cavitating jet of fluid, to generate a cloud of cavitation bubbles. For example, a nozzle such as that disclosed in U.S. Patent No. 6,855,208 or as specified in the American Society for Testing and Materials (ASTM) G134-95 standard may be used. Nozzle 212 may be sized to allow insertion into an intended workpiece or workpieces, without obstructing a passage or other channel-like feature to be finished, as described further with reference to Fig. 4, below. For example, nozzle 212 may have a diameter between one quarter and three quarters of a diameter of a passage to be finished.

Fig. 3 depicts nozzle assembly 210 in use. Nozzle 212 is inserted in a first end of a pipe 224, to smooth an interior surface 222. Flexible conduit 214 is connected to a supply of high-pressure water, and pipe 224 is submerged in a slurry 226 of water and abrasive particles 228. Nozzle 212 emits a cavitating jet 230 into inner passage 232 of pipe 224, forming a cloud 234 of cavitation bubbles. Abrasive particles 228 of slurry 226 are drawn into inner passage 232, where the particles are energized by the cavitation of cloud 234. A portion of the energized abrasive particles impact a region of interior surface 222 near cloud 234, thereby smoothing that region of the surface.

In the present example, pipe 224 is submerged in slurry 226 and abrasive particles 228 are supplied to cloud 234 by a suction effect generated by the injection of high-pressure water through nozzle 212, which draws the surrounding slurry into and down inner passage 232 of the pipe. In order for the slurry to reach the cloud of cavitating bubbles generated by nozzle 212, sufficient clearance around the nozzle and any guide structure is needed. The nozzle and guide structure(s) may be sized and/or configured accordingly, as discussed further below

In some examples, abrasive particles 228 may be supplied by other mechanisms. For example, a nozzle assembly used for smoothing of closed-end bores may include an abrasive supply hose in flexible conduit 214 and an abrasive delivery opening in nozzle 212. For another example, a variable flow rate supply of slurry may allow dynamic control of the material removal rate. In such examples, nozzle 212 may be larger relative to the diameter of a passage to be finished and/or clearance requirements around the nozzle may differ from the present example.

Nozzle assembly 210 is slowly and smoothly advanced along pipe 224, to achieve even, consistent smoothing of interior surface 222. In the depicted example, inner passage 232 has a constant diameter, so the nozzle assembly may be advanced at a constant rate. In examples where the interior space has variable geometry, a variable rate of advance may be calculated for the nozzle assembly, to achieve consistent smoothing. In other words, decreased smoothing action intensity resulting from a greater surface to cavitation cloud distance may be counteracted by an increased exposure time. For example, in a variable diameter pipe, nozzle assembly 210 may be advanced more slowly through sections of greater diameter.

Fig. 4 is an end-on view of nozzle assembly 210 in another pipe 236. Nozzle 212 is positioned in pipe 236 by a guide attachment 240, which may also be described as a spacing device. The guide attachment is configured to space an external surface 239 of nozzle 212 from an internal surface 238 of pipe 236, while allowing flow of water and abrasive particles down the pipe past the nozzle.

In the present example, guide attachment 240 maintains nozzle 212 in a centered, or substantially centered, position in pipe 236, and guides the nozzle along a generally centered path through the pipe. Such positioning may help achieve even smoothing of internal surface 238, and avoid excessive removal of material or areas of remaining roughness. The tolerance for deviations from a strictly centered path may depend on a desired even-ness of resultant smoothing. That is, the more even the smoothed surface is desired to be, the more precisely the nozzle may need to be positioned. In examples where only an overall average decrease in roughness is required, the nozzle may follow a roughly centered path and/or a path that on average is approximately centered. For instance, the nozzle may be manually guided through the pipe, without using guide attachment 240.

Nozzle 212 has an outer diameter 247, as measured in cross-section, perpendicular to a direction of fluid flow through the nozzle. In the present example, nozzle 212 has a constant outer diameter. In some examples, outer diameter 247 may vary along the nozzle. Either the constant outer diameter and/or a maximum value of outer diameter 247 may be less than an inner diameter of pipe 236. In other words, nozzle 212 may be sized to allow sufficient flow of flow of water and abrasive particles past the nozzle to the generated cavitation cloud. Preferably, outer diameter 247 may be less than approximately 75% of inner diameter 248.

Guide attachment 240 may include a plurality of protrusions extending out from external surface 239 of nozzle 212. Each protrusion may have a long axis perpendicular to the direction of fluid flow through nozzle 212 and/or perpendicular to a direction of the cavitating jet produced by the nozzle. The protrusions may be equal in length in order to match a circular cross-section of the pipe, or may vary according to the internal geometry of the pipe.

In the present example, guide attachment 240 includes four equally sized triangular vanes 242, equally spaced around a ring 244 that engages nozzle 212. The vanes may be described as arranged in two pairs of opposing vanes. A distal end of each vane 242 contacts internal surface 238. Guide attachment 240 may be described as having a span 246 between the distal ends of each pair of opposing vanes. Span 246 matches inner diameter 248 of pipe 236.

The triangular shape of vanes 242 may reduce the cross-sectional area of pipe 236 obstructed by guide attachment, maximizing flow of water and abrasive particles to the cavitation cloud generated by nozzle 212. Any shape and/or number of vanes 242 allowing sufficient flow and providing effective positioning of nozzle 212 may be included in guide attachment 240.

In some examples, guide attachment 240 may be configured to conform to variable geometry of pipe 236 and/or internal surface 238. For instance, vanes 242 may each be collapsible, but spring biased to extend outward from ring 244, such that span 246 varies to match variations in inner diameter 248 so that guide attachment 240 can maintain nozzle 212 in a centered position in pipe 236. For another instance, vanes 242 may include a flexible material that is configured to plastically deform in response to changes in the cross-sectional shape of pipe 236.

Guide attachment 240 may be part of a set of guide attachments, allowing configuration of nozzle assembly 210 for use with a variety of sizes of pipes and/or other channel-like features. A guide attachment having a span matching an inner diameter of a workpiece may be selected, and installed on nozzle 212 prior to surface finishing. Ring 244 and nozzle 212 may include corresponding features allowing snap-fit or other easy connection and removal of the guide attachment.

In the present example, guide attachment 240 consists of a Teflon material, and is designed for regular replacement. In some examples the attachment may be single-use and/or disposable. Other materials susceptible to damage over time when exposed to cavitation peening and energized abrasive particles of surface finishing may be used for such limited-use attachments. In some examples, the guide attachment may include metal or other materials resistant to such exposure, and may be suitable for extended and/or long term use.

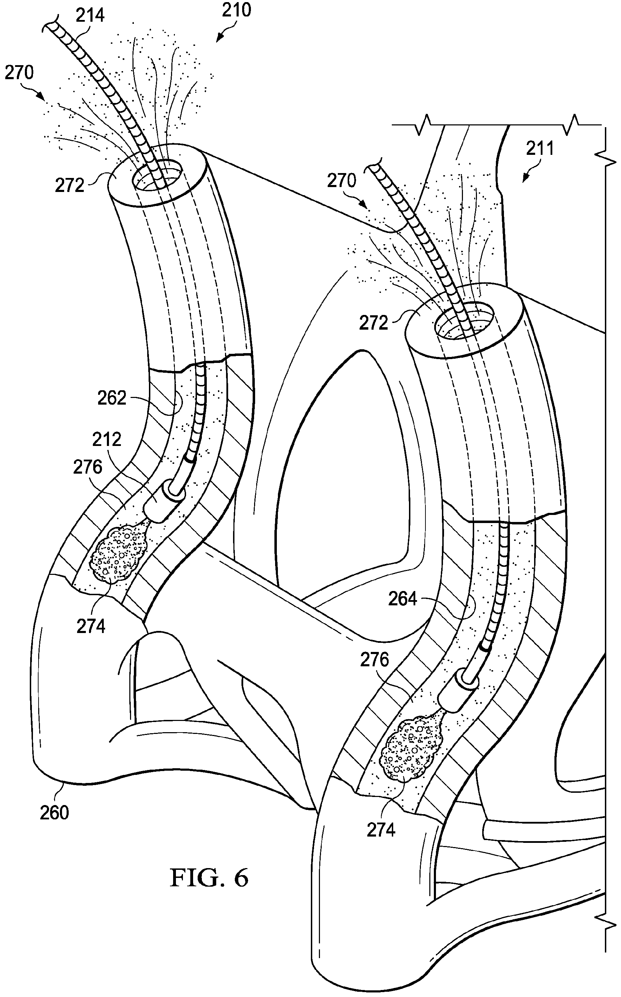

Fig. 5 depicts an additively manufactured (AM) part 260, having a first channel 262 and a second channel 264. Channels 262, 264 are manufactured with part 260, rather than being machined or bored out of the AM part. The channels may therefore have a more complex, curved shape but also have the same surface roughness characteristic of additive manufacture. Cavitation abrasive surface finishing may be performed on outer surface 266 of AM part 260 using either nozzle assembly 210, or a larger rigid nozzle assembly. However, nozzle assembly 210 may be needed to finish the interior of curved channels 262, 264, as depicted in Fig. 6.

In some examples, nozzle assembly 210 may be used to finish the two channels sequentially. In Fig. 6, nozzle assembly 210 is shown in use with a second nozzle assembly 211. The two assemblies may be matching, and may each have separate high pressure water supplies, or may both be supplied by a single high-pressure pump.

AM part 260 is submerged in a slurry 270 of water and abrasive particulates. Each of nozzle assemblies 210, 211 is inserted into an upper opening 272 of a respective channel 262, 264. Water is pumped through the nozzle assemblies to form a cavitating jet, which in turn forms a cloud 274 of cavitation bubbles and energized abrasive particles when injected into slurry 270. An interior surface is thereby smoothed, finished, and peened.

The cavitating jet also forces water and slurry 270 down channels 262, 264, and out a lower opening, not shown. As a result, slurry 270 is drawn into upper opening 272, down the channel, and past the nozzle assembly to supply abrasive particles to cloud 274.

As channels 262, 264 are matching in cross-sectional area and curvature, nozzle assemblies 210, 211 are synchronously advanced down the channels. In examples where the channels differ, the nozzles may be independently controlled and advanced along the channels. As each nozzle assembly advances along the respective channel, flexible conduit 214 may flex to conform to the curvature of the channel, allowing nozzle 212 to remain centered in the channel. Flexible conduit 214 may also allow nozzle 212 to reach portions of the channel inaccessible to a rigid tool.

### C. Illustrative Method for Inner Surface Smoothing

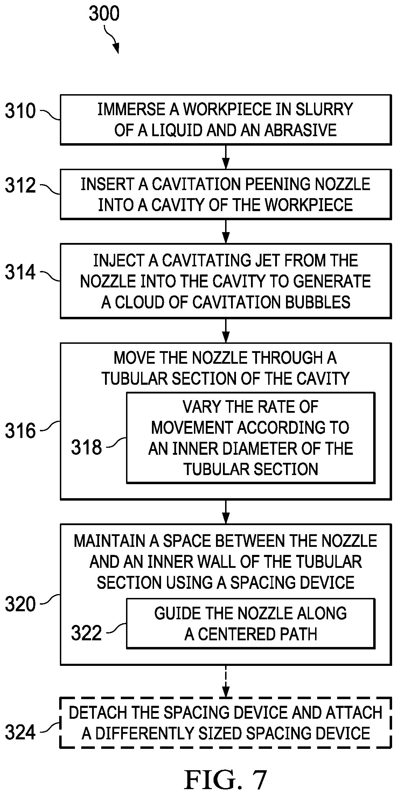

This section describes steps of an illustrative method 300 of smoothing an inner surface of a tubular wall of a workpiece, see Fig. 7. Aspects of abrasive cavitation systems and/or nozzle assemblies described above may be utilized in the method steps described below. Where appropriate, reference may be made to components and systems that may be used in carrying out each step. These references are for illustration, and are not intended to limit the possible ways of carrying out any particular step of the method.

Fig. 7 is a flowchart illustrating steps performed in an illustrative method, and may not recite the complete process or all steps of the method. Although various steps of method 300 are described below and depicted in Fig. 7, the steps need not necessarily all be performed, and in some cases may be performed simultaneously or in a different order than the order shown.

At step 310, the method includes immersing a workpiece in a slurry of a liquid and an abrasive. The slurry may be contained in a tank, and maintained at a constant pressure and concentration of abrasive. In some examples the tank may include a mixing device such as a mechanical agitator to maintain suspension of the abrasive in the liquid. In such examples, optional step 311 of mixing the slurry to maintain suspension of the abrasive in the liquid may be performed. Additional abrasive may also be added as needed to maintain the desired concentration.

The abrasive may include particles of one or more of metal, glass, ceramic, silica oxide, aluminum oxide, pumice, nut shells, corn cob, plastic, natural or synthetic rubber, silicon, fluoropolymer elastomer, Viton, Teflon, and carbon nano-material abrasives. Preferably, the included particles may be within a dimensional range of approximately 16 to 1200 ANSI grit size. Any effect abrasive media, combination of media, or mixture of media or particles may be used.

For example, an additively manufactured part having a through-channel may be submerged in a one-to-two ratio mixture of garnet 150 grit and water. The mixture may fill the channel as the part is submerged.

Step 312 includes inserting a cavitation peening nozzle into a cavity of the workpiece. The nozzle may be connected to a conduit that supplies a high-pressure fluid such as water. Preferably the supplied fluid may match the liquid of the slurry. Both the nozzle and a section of the conduit proximate the nozzle may be configured to withstand exposure to cavitation and energetic abrasive particles. For example, the nozzle and/or conduit may have an outer-most structure including a metal or metallic material.

The workpiece may be any part having an open-ended cavity, or a cavity with first and second openings. The cavity may include a tubular wall portion or a tubular section having a circumferential wall. Method 300 may be used to smooth an inner surface of the wall portion or circumferential wall.

Step 314 includes injecting a cavitating jet from the nozzle into the cavity to generate a cloud of cavitation bubbles. The cavitating jet may comprise the high-pressure fluid supplied to the nozzle, discharged at a pressure and flow rate through a nozzle geometry that generates the cloud of cavitation bubbles. The fluid may be discharged at a high pressure, preferably between 50 and 20,000 pounds per square inch.

The cavitating jet may be injected into the slurry of liquid and abrasive filling the cavity, forming a mixture of cavitation bubbles and abrasive particles. The bubble cloud formed may have a swirling, vortex motion that imparts speed, momentum, and kinetic energy to the abrasive. The cavitational collapse of the bubbles may also collectively accelerating the motion of the abrasive particles to achieve a high speed and sufficient kinetic energy to remove material from a surface of the workpiece upon impact, thereby facilitating removal of material from the inner surface of the workpiece to smooth the surface. The cavitation bubbles may further perform cavitation peening and cleaning of the inner surface of the workpiece.

Step 316 includes moving the nozzle through a tubular section of the cavity. The nozzle may be advanced along the tubular section, while continuing to inject the cavitating jet from the nozzle. In this manner, the cloud of cavitation bubbles and abrasive particles may be moved through the tubular section to smooth the inner surface of the tubular section. The nozzle may be advanced slowly, to allow sufficient time for the cavitation bubbles and abrasive particles to act on the inner surface and perform desired smoothing and peening.

Sub-step 318 of step 316 includes varying the rate of movement of the nozzle through the tubular section according to an inner diameter of the tubular section. The nozzle may be moved at a constant rate as the inner diameter of the tubular section remains constant, the rate of movement may be increased for areas of the tubular section having a smaller inner diameter, and may be decreased for areas having a larger inner diameter. Such control of the rate of movement may facilitate even smoothing of the inner surface of the tubular section, as a distance between the inner surface and the cavitation bubble cloud produced by the nozzle varies. In other words, equivalent smoothing may require additional exposure time when the cloud is more distant from the surface to be smoothed.

In some examples, a rate of movement of the nozzle may be calculated according to a geometry of the tubular section. For instance, movement of the nozzle may be computer controlled according to a three-dimensional model of the tubular section. In some examples, an operator may evaluate smoothing and move the nozzle as desired smoothing is achieved.

Step 320 includes maintaining a space between the nozzle and an inner wall of the tubular section using a spacing device. Sub-step 322 includes guiding the nozzle along a centered path, which in some examples may also be performed using the spacing device. Step 320 and sub-step 322 may be performed throughout step 316, as the nozzle is moved through the tubular section of the cavity of the workpiece.

The nozzle may be sized to allow space between an external side of the nozzle and the inner wall of the tubular section. For example, an outer diameter of the nozzle may be no more than half an inner diameter at a narrowest point in the tubular section. The spacing device may be removably or fixedly attached to the nozzle, and extend radially out from the nozzle relative to a direction of fluid flow through the nozzle. The spacing device may include a plurality of protrusions, which by contacting the inner wall of the tubular section may prevent the nozzle approaching closer to the inner wall than a selected spacing distance.

Maintaining space between the nozzle and the inner wall of the tubular section may allow a flow of the slurry in which the workpiece is submerged, past the nozzle to the cavitation cloud. The pressure of the cavitating jet down the tubular section may result in a suction action drawing the slurry down the tubular section past the nozzle, thereby maintaining liquid and abrasive at the nozzle to generate the cloud of cavitating bubbles and energized abrasive particles.

The spacing device may be configured to minimize blockage of flow past the nozzle. For example, the spacing device may include apertures, may include a minimum number of protrusions needed for effective spacing, and/or may have any shape suited to facilitating flow of the slurry. The spacing device may also be configured to center the nozzle in the tubular section. For example, protrusions of the spacing device may be arranged in pairs of equal length, on opposing sides of the device

Centering the nozzle in the tubular section, and guiding the nozzle along a centered, or substantially centered, path through the tubular section may allow even smoothing around a circumference of the inner wall. In some examples, sub-step 322 may be performed by an experienced operator and/or by computer control according to a three-dimensional model of the tubular section, without the spacing device. In some examples, properties of the tubular section such as asymmetrical geometry may require a non-centered path to achieve even smoothing, in which cases sub-step 322 may include guiding the nozzle along such a path.

Optional step 324 includes detaching the spacing device from the nozzle, and attaching a differently sized spacing device. The optional step may be performed after completing smoothing of a workpiece and before repeating method 300, between smoothing separate cavities or tubular sections of a single workpiece, and/or between smoothing areas of different diameter within a tubular section.

The spacing device may be one of a set of spacing devices, and/or may be described as a modular spacing device. The spacing device may selectively attachable to the nozzle, for example by elastic or snap-fit engagement. The nozzle may include recesses or other features to facilitate connection of the spacing devices.

### Illustrative Combinations and Additional Examples

This section describes additional aspects and features of methods and apparatus for smoothing a surface, presented without limitation as a series of paragraphs, some or all of which may be alphanumerically designated for clarity and efficiency. Each of these paragraphs can be combined with one or more other paragraphs, and/or with disclosure from elsewhere in this application, in any suitable manner. Some of the paragraphs below expressly refer to and further limit other paragraphs, providing without limitation examples of some of the suitable combinations.
A0. A method of smoothing an inner surface of a tubular wall of a workpiece, comprising:
   immersing a workpiece in a mixture of a liquid and an abrasive,
   inserting a cavitation peening nozzle into a cavity of the workpiece, and
   injecting a cavitating jet from the cavitation peening nozzle into the cavity.
A1. The method of A0, further comprising:
   moving the cavitation peening nozzle through a tubular section of the cavity, wherein the tubular section has a circumferential wall.
A2. The method of A0 or A1, further comprising:
   maintaining a radial space between an external surface of the cavitation peening nozzle and the circumferential wall of the tubular section during the moving step.
A3. The method of A1 or A2, wherein the moving step includes varying a rate of moving the cavitation peening nozzle through the tubular section in relation to changes in an inner diameter of the circumferential wall.
A4. The method of any of A1-A3, wherein the cavitation peening nozzle has a cylindrical external surface having an outer diameter less than 90% of an inner diameter of the circumferential wall of the tubular section.
A5. The method of A4, wherein the outer diameter is less than 75% of the inner diameter.
A6. The method of A0-A5, wherein the mixture is contained in a tank, and further comprising mixing the mixture to maintain suspension of the abrasive in the liquid.
A7. The method of any of A0-A6, further comprising
   delivering a pressurized fluid to the cavitation peening nozzle.
A8. The method of any of A0-A7, further comprising:
   guiding the cavitation peening nozzle along a substantially centered path through a tubular section of the cavity by using a spacing device between an external surface of the cavitation peening nozzle and an inner surface of the tubular section of the cavity.
A9. The method of A8, wherein the spacing device includes a plurality of protrusions extending outward from the external surface of the cavitation peening nozzle.
A10. The method of A9, wherein the plurality of protrusions includes vanes evenly distributed around the external surface of the cavitation peening nozzle.
A11. The method of A10, wherein the plurality of protrusions includes at least four vanes.
A12. The method of any of A9-A11, where the plurality of protrusions includes at least one retractable protrusion, the protrusion being spring-biased to extend outward from the external surface of the cavitation peening nozzle.
A13. The method of any of A9-A12, wherein the plurality of protrusions includes at least one protrusion comprising a flexible material.
A14. The method of any of A8-A13, wherein the spacing device is configured to alter shape according to a varying geometry of the inner surface of the tubular section of the cavity.
A15. The method of any of A8-14, wherein the spacing device has a variable diameter.
A16. The method of any of A8-A15, further comprising detaching the spacing device and attaching another spacing device sized for a different tubular configuration.
A17. The method of any of A0-A16, wherein the abrasive includes a garnet grit.
B0. An apparatus for smoothing a surface, comprising:
   a first fluid source,
   a cavitation peening nozzle having an external side and a spacing device extending outward from the external side, and
   a conduit connecting the first fluid source to the cavitation peening nozzle, and a pump configured to pump a first fluid from the first fluid source through the conduit to the cavitation peening nozzle, the cavitation peening nozzle being configured to generate a cavitation bubble cloud for smoothing an inner surface of a tubular wall of a workpiece.
B1. The apparatus of B0, further comprising:
   a tank containing a second fluid configured for containing a submerged workpiece while the cavitation peening nozzle is used to smooth an inner surface of a tubular wall of the workpiece.
B2. The apparatus of B1, wherein the tank includes a mixing device for maintaining a homogenous concentration of abrasive particles in the second fluid.
B3. The apparatus of B2, wherein the maintained concentration is between approximately one quarter and three quarters.
B4. The apparatus of B2, wherein the maintained concentration is between approximately 10 and 60 percent.
B5. The apparatus of any of B1-B4, wherein the tank includes a plurality of mixing devices.
B6. The apparatus of any of B1-B5, wherein the second fluid includes abrasive.
B7. The apparatus of B6, wherein the abrasive comprises garnet grit.
B8. The apparatus of B6 or B7, wherein the abrasive comprises one or more of (a) natural or synthetic rubber, (b) silicon, (c) fluoropolymer elastomer, (d) Viton, (e) Teflon, and (f) Fullerene based carbon nano-material.
B9. The apparatus of any of B6-B8, wherein the abrasive includes a nano-material.
B10. The apparatus of any of B0-B9, wherein the spacing device is configured to maintain the cavitation peening nozzle in a substantially centered location inside the tubular wall.
B11. The apparatus of any of B0-B10, wherein the spacing device includes a plurality of protrusions extending from the external side configured to maintain a substantially equal opposing radial distance between the external side of the cavitation peening nozzle and the inner surface of the tubular wall of the workpiece.
B12. The apparatus of B11, wherein each of the plurality of protrusions has a long axis extending perpendicular to a direction of fluid flow through the cavitation peening nozzle.
B13. The apparatus of B11 or B12, wherein the plurality of protrusions includes at least four protrusions.
B14. The apparatus of any of B0-B13, wherein the cavitation peening nozzle has a cross-sectional diameter parallel to an inner diameter of the tubular wall, the cross-sectional diameter of the cavitation peening nozzle being less than 90% of the inner diameter of the tubular wall.
B15. The apparatus of B14, wherein the cross-sectional diameter is less than 75% of the inner diameter.
B16. The apparatus of any of B0-B15, wherein the cavitation peening nozzle has a proximal end and a distal end, the proximal end having a fixture for connecting the cavitation peening nozzle to a flexible tube portion of the conduit, the distal end having an aperture for dispensing a cavitating jet of the first fluid.
B17. The apparatus of B16, wherein the flexible tube portion has a metal protector over a section of the flexible tube portion adjacent to the fixture of the cavitation peening nozzle.
B18. The apparatus of B16 or B17, wherein the flexible tube portion includes a metal reinforced outer flexible hose and a polymeric inner flexible hose.
B19. The apparatus of any of B0-B18, wherein the spacing device is detachable, allowing interchangeable spacing devices of different sizes to be used on the same cavitation peening nozzle for smoothing different tubular configurations.
B20. The apparatus of any of B0-B19, further including an abrasive material delivery mechanism.
B21. The apparatus of B20, wherein the abrasive material delivery mechanism is integrated with the cavitation nozzle.
B22. The apparatus of B20 or B21, wherein the abrasive material delivery mechanism is configured to convey a slurry of abrasive material and water.
C0. An apparatus for smoothing a surface, comprising:
   a fluid source,
   a cavitation peening nozzle,
   a conduit connecting the fluid source to the cavitation peening nozzle,
   a pump configured to pump high pressure fluid from the fluid source through the conduit to the cavitation peening nozzle, the cavitation peening nozzle being configured to generate a cavitation bubble cloud for smoothing an inner surface of a tubular wall of a workpiece, and
   a slurry of a liquid and an abrasive, inside the tubular wall of the workpiece.
C1. The apparatus of C0, wherein the cavitation peening nozzle has a circumferential external surface, and a spacing device extending outward from the external surface.
C2. The apparatus of C1, wherein the spacing device includes a plurality of vanes evenly distributed around the external surface of the cavitation peening nozzle.
C3. The apparatus of C1 or C2, wherein the spacing device is detachable, allowing interchangeable spacing devices having vanes of different sizes to be used on the same cavitation peening nozzle for smoothing different tubular configurations.

### Advantages, Features, and Benefits

The different examples of the cavitation abrasive surface finishing systems and methods described herein provide several advantages over known solutions for finishing rough surfaces. For example, the illustrative embodiments of the method described herein allow finishing of interior surfaces and features such as channels, bores, tubes, and/or hollow structures.

Additionally, and among other benefits, illustrative examples described herein allow a surface to be smoothed, cleaned, and peened with one process.

Additionally, and among other benefits, illustrative examples described herein allow surface finishing with safe and inexpensive materials such as water and ceramic abrasives.

Additionally, and among other benefits, illustrative examples described herein allow consistent and even smoothing along the length of an elongate interior space such as a channel.

No known system or device can perform these functions, particularly for such difficult to access surfaces. Thus, the illustrative examples described herein are particularly useful for additively manufactured components with interior surfaces. However, not all examples described herein provide the same advantages or the same degree of advantage.

### Conclusion

The disclosure set forth above may encompass multiple distinct examples with independent utility. Although each of these has been disclosed in its preferred form(s), the specific examples thereof as disclosed and illustrated herein are not to be considered in a limiting sense, because numerous variations are possible. To the extent that section headings are used within this disclosure, such headings are for organizational purposes only. The subject matter of the disclosure includes all novel and nonobvious combinations and subcombinations of the various elements, features, functions, and/or properties disclosed herein. The following claims particularly point out certain combinations and subcombinations regarded as novel and nonobvious. Other combinations and subcombinations of features, functions, elements, and/or properties may be claimed in applications claiming priority from this or a related application. Such claims, whether broader, narrower, equal, or different in scope to the original claims, also are regarded as included within the subject matter of the present disclosure.

Aspects and features of the present disclosure are set forth in the following numbered clauses which contain the subject matter of the claims of the parent application as filed:
1. A method (300) of smoothing an inner surface of a tubular wall of a workpiece, comprising:
   immersing (310) a workpiece in a mixture of a liquid and an abrasive,
   inserting (312) a cavitation peening nozzle into a cavity of the workpiece, and
   injecting (314) a cavitating jet from the cavitation peening nozzle into the cavity.
2. The method (300) of clause 1, further comprising:
   moving (316) the cavitation peening nozzle through a tubular section of the cavity, wherein the tubular section has a circumferential wall.
3. The method (300) of clause 2, further comprising:
   maintaining (320) a radial space between an external surface of the cavitation peening nozzle and the circumferential wall of the tubular section during the moving step.
4. The method (300) of clause 2 or clause 3, wherein the moving step (316) includes varying (318) a rate of moving the cavitation peening nozzle through the tubular section in relation to changes in an inner diameter of the circumferential wall.
5. The method (300) of any of clauses 1-4, wherein the mixture is contained in a tank, and further comprising mixing (311) the mixture to maintain suspension of the abrasive in the liquid.
6. The method (300) of any of clauses 1-5, further comprising:
   guiding (322) the cavitation peening nozzle along a substantially centered path through a tubular section of the cavity by using a spacing device between an external surface of the cavitation peening nozzle and an inner surface of the tubular section of the cavity.
7. The method (300) of clause 6, further comprising detaching (324) the spacing device and attaching another spacing device sized for a different tubular configuration.
8. An apparatus (110) for smoothing a surface, comprising:
   a first fluid source (113),
   a cavitation peening nozzle (142, 212) having an external side (239) and a spacing device (240) extending outward from the external side, and
   a conduit (116, 140, 214, 216) connecting the first fluid source to the cavitation peening nozzle, and a pump (112) configured to pump a first fluid (114) from the first fluid source through the conduit to the cavitation peening nozzle, the cavitation peening nozzle being configured to generate a cavitation bubble cloud (146, 234, 274) for smoothing an inner surface (144, 238) of a tubular wall (232, 262, 264) of a workpiece (136, 224, 236, 260).
9. The apparatus (110) of clause 8, further comprising:
   a tank (124) containing a second fluid (126, 226, 270) configured for containing a submerged workpiece (136, 224, 236, 260) while the cavitation peening nozzle (142, 212) is used to smooth an inner surface (144, 238) of a tubular wall (232, 262, 264) of the workpiece (136, 224, 236, 260).
10. The apparatus (110) of clause 9, wherein the tank (124) includes a mixing device (154) for maintaining a homogenous concentration of abrasive particles (150, 228) in the second fluid (126, 226, 270).
11. The apparatus (110) of clause 10, wherein the maintained concentration is between approximately 10 and 60 percent.
12. The apparatus (110) of clause 9, wherein the second fluid (126, 226, 270) includes an abrasive (150, 228).
13. The apparatus (110) of clause 12, wherein the abrasive (150, 228) includes garnet grit.
14. The apparatus (110) of any of clauses 8-13, wherein the spacing device (240) includes a plurality of protrusions (242) extending from the external side (239) configured to maintain an equal radial distance between the external side of the cavitation peening nozzle (142, 212) and the inner surface (144, 238) of the tubular wall (232, 262, 264) of the workpiece (136, 224, 236, 260).
15. The apparatus (110) of any of clauses 8-14, wherein the cavitation peening nozzle (142, 212) has a cross-sectional diameter (247) parallel to an inner diameter (248) of the tubular wall (232, 262, 264), the cross-sectional diameter of the cavitation peening nozzle being less than approximately 75 percent of the inner diameter of the tubular wall.

## Claims

1. An apparatus (110) for smoothing a surface, comprising:
a fluid source (113);
a cavitation peening nozzle (142, 212);
a conduit (116, 140, 214, 216) connecting the fluid source (113) to the cavitation peening nozzle (142, 212);
a pump (112) configured to pump high pressure fluid (114) from the fluid source (113) through the conduit (116, 140, 214, 216) to the cavitation peening nozzle (142, 212), the cavitation peening nozzle (142, 212) being configured to generate a cavitation bubble cloud (146, 234, 274) for smoothing an inner surface (144, 238) of a tubular wall (232, 262, 264) of a workpiece (136, 224, 236, 260); and
a slurry (126, 226, 270) of a liquid and an abrasive, inside the tubular wall (232, 262, 264) of the workpiece (136, 224, 236, 260).

2. The apparatus of claim 1, comprising a spacing device (240), wherein:
the cavitation peening nozzle (142, 212) has a circumferential external surface (239); and
the spacing device (240) extends outward from the external surface (239).

3. The apparatus of claim 2, wherein the spacing device (240) includes a plurality of vanes (242) evenly distributed around the external surface (239) of the cavitation peening nozzle (142, 212).

4. The apparatus of claim 3, wherein the plurality of vanes (242) includes four equally sized triangular vanes (242), and wherein:
the four triangular vanes (242) are equally spaced around a ring (244) that engages the cavitation peening nozzle (142, 212); and
in use, a distal end of each of the four triangular vanes (242) contacts the inner surface (144, 238) of the workpiece (136, 224, 236, 260).

5. The apparatus of any of claims 2 to 4, wherein the spacing device (240) is configured to confirm to variable geometry of the inner surface (144, 238) of the workpiece (136, 224, 236, 260).

6. The apparatus of claim 5 when dependent upon claim 3 or claim 4, wherein:
the workpiece is a pipe (236); and
the plurality of vanes (242) include a flexible material configured to plastically deform in response to changes in the cross-sectional area of the pipe (236).

7. The apparatus of any of claims 2 to 6, wherein the spacing device (240) is detachable, allowing interchangeable spacing devices (240) having vanes (242) of different sizes to be used on the same cavitation peening nozzle (142, 212) for smoothing different tubular configurations.

8. The apparatus of any of claims 2 to 7, wherein the spacing device (240) is configured to maintain the cavitation peeing nozzle in a substantially centred position inside the tubular wall (232, 262, 264) of the workpiece (136, 224, 236, 260).

9. The apparatus of any preceding claim, wherein the conduit (116, 140, 214, 216) is a flexible conduit (116, 140, 214, 216).

10. The apparatus of claim 9, wherein the flexible conduit (116, 140, 214, 216) includes an outer metal-protected hose (218) and an inner polymeric high-pressure supply hose (220), and wherein the cavitation peening nozzle (142, 212) is coupled to the outer hose (218) and the inner hose (220) by a metal protector (216).

11. The apparatus of claim 10, wherein the outer hose (218) includes a metallic material or metal alloy, a braided material, a pleated material, and/or jointed rigid sections.

12. The apparatus of claim 9, wherein the flexible conduit (116, 140, 214, 216) comprises one or more flexible materials.

13. The apparatus of claim 9 or claim 12, wherein the flexible conduit (116, 140, 214, 216) comprises one or more mechanisms configured to enable flexion of the conduit, optionally wherein the mechanisms comprise hinges and/or joints.

14. The apparatus of any of claims 9, 12 or 13, wherein the flexible conduit (116, 140, 214, 216) is connected to the cavitation peening nozzle (142, 212) by a section of rigid piping.

15. The apparatus of any preceding claim, wherein the cavitation peening nozzle (142, 212) has an outer diameter (247) of less than around 75% of an inner diameter (248) of the tubular wall (232, 262, 264) of the workpiece (136, 224, 236, 260).
